Europäisches Patentamt

European Patent Office

Office européen des brevets

(19)

(11) Numéro de publication : **0 485 327 A1**

(12) # DEMANDE DE BREVET EUROPEEN

(21) Numéro de dépôt : **91810783.0**

(22) Date de dépôt : **08.10.91**

(51) Int. Cl.⁵ : **B64D 17/02**

(30) Priorité : **08.11.90 CH 3555/90**

(43) Date de publication de la demande :
**13.05.92 Bulletin 92/20**

(84) Etats contractants désignés :
**AT CH DE FR IT LI**

(71) Demandeur : **Graber, Pierre**
**Fin-Cibourg 41**
**CH-2616 Renan/BE (CH)**

(72) Inventeur : **Graber, Pierre**
**Fin-Cibourg 41**
**CH-2616 Renan/BE (CH)**

(74) Mandataire : **Fischer, Franz Josef et al**
**BOVARD SA Ingénieurs-Conseils ACP**
**Optingenstrasse 16**
**CH-3000 Bern 25 (CH)**

(54) **Siège de sécurité pour sports aéronautiques.**

(57) Le siège de sécurité pour sports aéronautiques a été spécialement développé afin de diminuer la gravité des accidents se produisant juste après un décollage ou juste avant un atterrissage lors de la pratique du parapente. Le siège de sécurité est composé d'une coque résistante, garnie à l'intérieur d'un matériau ou d'une structure absorbante. Un appuie-cuisses escamotable permet de décoller et d'atterrir en position debout. Un harnais est directement fixé à la coque du siège.

FIG. 1

EP 0 485 327 A1

De nombreux sports aéronautiques se sont développés ces dernières années et trouvent de plus en plus d'adeptes, que ce soit le parachutisme, l'aile delta, le parapente ou le vol sur ULM (avions ultra-légers motorisés).

Le parapente en particulier, l'un des plus jeunes des sports cités, est actuellement en plein développement. Depuis les débuts de ce sport, des progrès ont été réalisés dans les matériaux et la confection de la voile de parapente, de même que les techniques de vol ont été améliorées. Ces deux facteurs réunis permettent d'augmenter considérablement la durée d'un vol, durée qui peut maintenant atteindre quelques heures pour les pilotes et les voiles les plus performants.

Dans les premières formes d'exécution des parapentes, le pilote était suspendu à un harnais comme les parachutistes; vu l'augmentation de la durée de vol, une chaise de toile appelée sellette a été conçue et adaptée aux parapentes, ce qui fait que le pilote jouit en vol d'un plus grand confort en étant en position assise.

En fait, lors du décollage et de l'atterrissage, il est nécessaire que le pilote soit en position debout afin de s'élancer, respectivement de se recevoir sur les jambes; la légèreté ainsi que la souplesse de la sellette de toile permet facilement au pilote de passer de la position debout à la position assise et inversement.

La plupart des accidents survenant lors de la pratique de ce sport ont lieu soit au décollage, soit à l'atterrissage, soit juste après le décollage ou juste avant l'atterrissage et consistent en une prise de contact plus ou moins brutale avec le sol. Nous ne considérerons pas ici les accidents possibles dont la cause initiale (collision entre deux parapentes, déchirure de la voile, etc...) se produit en plein vol, à une grande hauteur par rapport au sol.

Dans le cas des accidents ayant lieu directement au décollage ou à l'atterrissage et où le pilote est en position debout, les conséquences de ces accidents affectent généralement uniquement les jambes du pilote. Par contre lorsque l'accident a lieu juste après le décollage, à un moment où l'aile ne s'est pas encore trop élevée et où le pilote s'est déjà mis en position assise, ou alors lorsque il a lieu juste avant l'atterrissage, lorsque l'aile est relativement proche de la terre et que le pilote est encore en position assise, les conséquences de tels accidents peuvent être beaucoup plus graves puisqu'elles concernent généralement le bassin ou la colonne vertébrale du pilote. De manière plus générale, les accidents considérés ici, sont ceux provenant lorsque le pilote est en position assise et se produisant à relativement faible hauteur par rapport au sol ou au relief où se produit le contact du pilote et du sol.

Aucune solution n'ayant été apportée jusqu'à aujourd'hui, permettant d'éliminer les conséquences de ce type d'accidents, le siège de sécurité selon l'invention, selon plusieurs formes d'exécution, ayant les caractéristiques mentionnées dans les revendications, se propose d'apporter une solution efficace à ce problème.

Un mode de réalisation préférentiel du siège de sécurité selon l'invention se comprend facilement à partir du dessin en annexe avec les figures où:

la figure 1 représente une vue en perspective d'une forme d'exécution préférentielle du siège de sécurité selon l'invention,

la figure 2 représente une vue en perspective de la coque du siège de sécurité de la figure 1, l'appuie-cuisses étant en position rabattue,

la figure 3 représente une coupe de la coque du siège de sécurité selon la ligne III-III de la figure 1, et

la figure 4 représente une élévation de la face arrière du siège de sécurité.

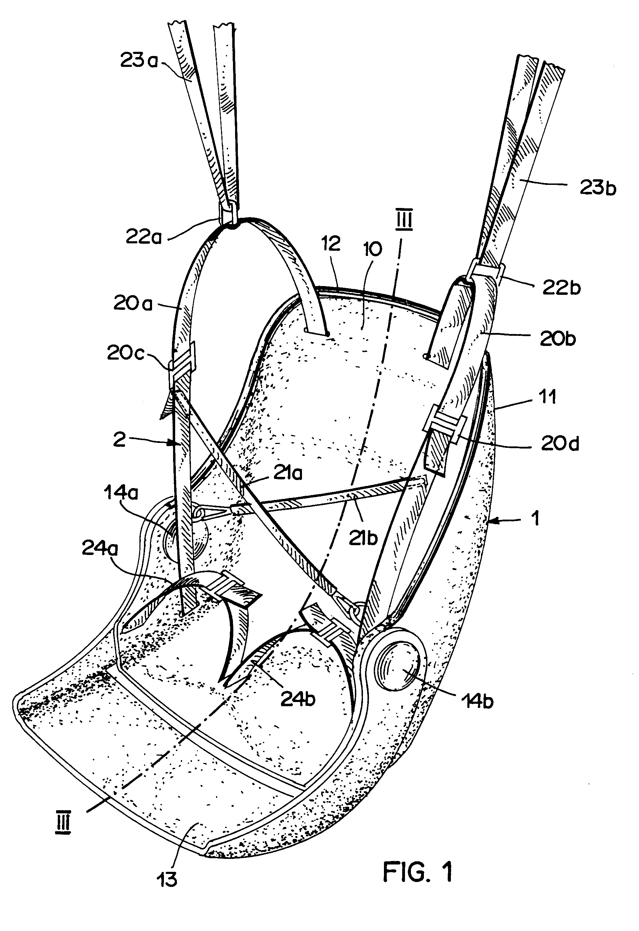

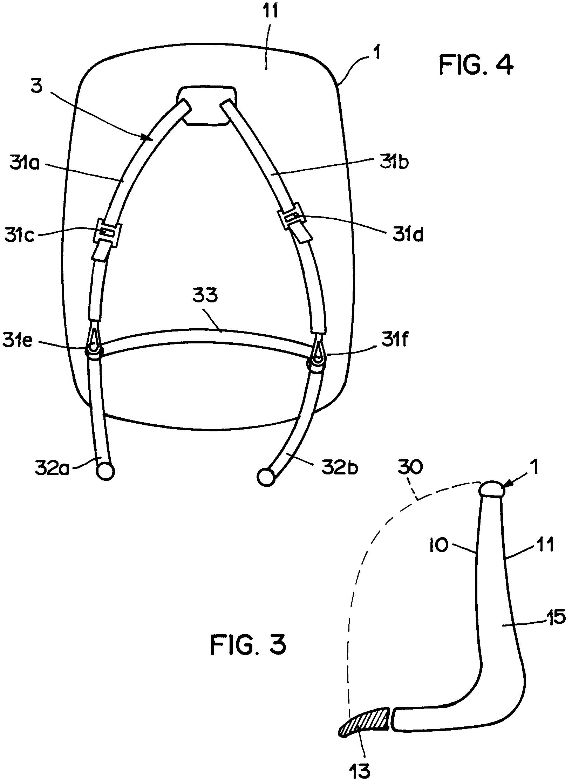

Sur la figure 1, on remarque que le siège de sécurité est constitué principalement d'une coque 1 à laquelle est fixé un harnais 2. La coque 1 est constituée, de manière préférentielle, de deux feuilles de matière synthétique, relativement épaisses et mises en forme et découpées selon un procédé adéquat, par exemple par moulage ou thermoformage. La première de ces feuilles constitue la face intérieure 10 de la coque, alors que la seconde de ces feuilles constitue la face extérieure 11 de la coque. Les deux faces 10 et 11 de la coque 1 sont reliées entre elles, sur leur pourtour, par soudure ou par n'importe quel procédé convenable, de manière à former une coque rigide, un espace étant laissé entre les deux faces 10 et 11, qui sera rempli d'une matière absorbante comme décrit plus loin. Le matériau constituant les faces intérieure 10 et extérieure 11 doit être suffisamment rigide pour pouvoir soutenir le poids du pilote ainsi que les chocs se produisant lors de la pratique de ce sport. Ce point sera particulièrement expliqué en regard de la figure 3.

L'arête de pourtour extérieur de la coque 1, comprenant la soudure des deux faces 10 et 11, ou une partie de ce pourtour, peut être revêtue ou non d'un bourrelet de matière molle 12, par exemple de la mousse, afin d'augmenter encore le confort du pilote.

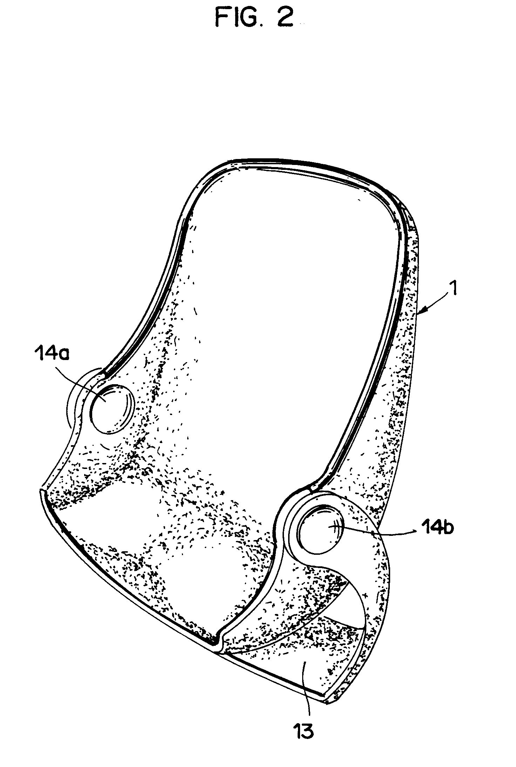

Un appuie-cuisses 13 formé par exemple d'une feuille de matière synthétique épaisse, obtenue par exemple par moulage ou thermoformage, a une forme de bande dont les deux extrémités sont relevées et décalées vers l'arrière, de manière à venir envelopper les deux côtés latéraux de la coque 1. Deux dispositifs de rotation, 14a et 14b relient de manière pivotante l'appuie-cuisses 13 aux côtés latéraux de la coque 1. Ainsi, l'appuie-cuisse 13 peut s'escamoter sous la coque 1, en pivotant autour de l'axe commun aux deux dispositifs de rotation 14a et 14b. Lorsque l'appuie-cuisses 13 est relevé, comme indiqué sur la figure 1, le pilote est en position assise confortable; lorsque l'appuie-cuisses 13 est escamoté, comme représenté sur la figure 2, le pilote est en position quasi-debout, permettant le décollage ou l'atterrissage. La commande de relevage ou d'escamotage de l'appuie-cuisse 13 peut se faire en saisissant ledit appuie-cuisses par une main et en le basculant dans un sens ou dans l'autre, ou alors en agissant sur une manette disposée dans l'un des dispositifs 14a ou 14b et commandant la rotation de l'appuie-cuisses 13. Des crans de fin de course, disposés dans un ou dans les deux dispositifs de rotation 14a et 14b, permettent de fixer l'appuie-cuisse selon l'une ou l'autre des positions relevée ou escamotée, sans qu'un pivotement intempestif dudit appuie-cuisses 13 puisse se produire.

Le dispositif de harnais 2 est composé généralement de deux courroies de bretelles 20a et 20b ainsi que de sangles de maintien 21a et 21b. Les extrémités de chaque courroie de bretelle 20a et 20b sont fixées de manière très solide à la coque 1, l'une des extrémités étant fixée à proximité du sommet du dossier du siège alors que l'autre extrémité est fixée à proximité du placet du siège. Selon une forme d'exécution, chacune des courroies 20a et 20b est faite d'une seule pièce, chaque courroie se poursuivant à l'intérieur de la coque 1, dans l'espace disposé entre les faces intérieure 10 et extérieure 11. Des dispositifs de fermeture et/ou de réglage de longueur 20c et 20d, selon l'une ou l'autre des formes d'exécutions connues, sont disposés sur les courroies de bretelles 20a et 20b. Des boucles 22a et 22b disposées sur chacune des courroies de bretelles 20a et 20b, fixent les suspentes 23a et 23b de la voile de parapente (non représentée). Les sangles de maintien 21a et 21b servent à maintenir le pilote dans le harnais 2. Des courroies supplémentaires 24a et 24b disposées en travers du placet du siège sont agencées de manière à enserrer les cuisses du pilote, de manière à ce qu'il soit fermement maintenu dans son siège.

A la figure 2, on voit le siège de sécurité précèdent, débarrassé de toutes les courroies du harnais et dont l'appuie-cuisses 13 a été escamoté sous la coque 1.

La figure 3 est une coupe à travers la coque 1, selon la ligne III-III de la figure 1. Comme indiqué précédemment, la coque 1 est composée de l'assemblage de la feuille formant face intérieure 10 avec la feuille formant face extérieure 11. La forme de chacune de ces faces 10 et 11 est telle que leur assemblage crée un espace intermédiaire 15 entre elles. Le but de l'invention étant de proposer un siège de sécurité capable d'absorber des chocs plus ou moins brutaux lors d'un contact non désiré avec le sol, la combinaison de la forme des faces 10 et 11, de la matière et de l'épaisseur des feuilles les constituant, ainsi que de la matière remplissant l'espace intermédiaire 15 doit être particulièrement bien étudiée afin que le siège de sécurité remplisse bien la fonction voulue et protège efficacement le bassin et la colonne vertébrale du pilote en cas d'accident. Il doit fonctionner d'une manière analogue à celle d'un casque de motocycliste, soit résister sans dommages à de légers chocs ou éraflures et absorber un maximum d'énergie, éventuellement en se détruisant, lors de chocs plus violents.

Pour ceci, l'espace intermédiaire 15 est rempli d'une matière dont la forme et la composition est telle qu'elle peut absorber des chocs importants. On trouve plusieurs possibilités à cet effet, tout d'abord cet espace intermédiaire peut être conçu comme une zone de déformation, comprenant un certain nombre de cloisons déformables reliant les deux faces 10 et 11 en des endroits choisis. Ainsi on créé des zones à déformation variable, d'une manière assez analogue à ce qui est fait dans l'industrie automobile; les espaces entre les cloisons déformables peuvent rester vides ou être remplis d'une matière absorbante, un genre de mousse par exemple. Selon une autre forme d'exécution du remplissage de l'espace intermédiaire 15, celui-ci peut être garni, complètement ou en partie, d'une structure en nid d'abeille. Selon encore une autre forme d'exécution, cet espace intermédiaire 15 peut être rempli, complètement ou en partie, d'un matériau, par exemple sous forme de mousse, la densité de ladite mousse étant constante dans tout l'espace intermédiaire ou étant différente dans certaines zones dudit espace. Il est évident que l'espace intermédiaire 15 peut être rempli d'une combinaison des moyens décrits plus haut, par exemple la partie dorsale étant protégée par une structure en nid d'abeilles, le placet étant protégé par des cloisons déformables et les côtés latéraux du siège étant protégés par de la mousse, toute autre combinaison de ces moyens ou d'autres remplissant le même but pouvant être envisagée. La matière et l'épaisseur des feuilles formant les faces intérieure 10 et extérieure 11 doit être choisie de manière à pouvoir contenir le rembourrage choisi disposé dans l'espace intermédiaire 15 et à pouvoir absorber de légers chocs sans endommagement. La construction de la coque du siège a été décrite par l'assemblage de deux feuilles préalablement formées; tout autre moyen permettant d'obtenir une coque creuse susceptible d'être remplie d'un matériau absorbant peut être utilisé, par exemple une coque creuse obtenue par moulage ou alors, selon une autre forme d'exécution, la coque peut être obtenue par enduction de couches successives de matériaux synthétiques sur une structure centrale absorbant les chocs.

Les matériaux constituant la coque 1 ainsi que le rembourrage emplissant l'espace intermédiaire 15 sont aussi choisis afin de remplir la fonction de sécurité du siège. D'autre part, vu que ledit siège doit être porté par le pilote, comme on le verra plus bas, il doit être aussi léger que possible; on choisira donc des matériaux d'aussi faible densité que possible tout en ayant une bonne résistance mécanique. On choisira donc parmi les métaux légers, par exemple de l'aluminium ou de ses alliages ou parmi les matériaux synthétique et particulièrement parmi les matériaux composites, tels que la fibre de verre ou de carbone, le kevlar, la mousse de vinyle, etc.

L'appuie-cuisses 13 ne nécessite pas d'être congru comme le reste de la coque 1, il peut simplement être fait en une matière synthétique homogène.

La figure 4 est une vue de l'arrière de la coque 1, montrant la face extérieure 11 équipée d'un dispositif de portage 3. En effet, pour pratiquer ce sport, le pilote doit généralement accéder à un point élevé d'où il décollera pour un vol en parapente. Pour ceci, l'ensemble de la voile, des suspentes, du harnais, ainsi que des autres équipements nécessaire est plié et rangé à l'intérieur de la coque 1, comme schématisé par le traitillé 30 sur la figure 3. Une housse peut venir recouvrir cet équipement, cette housse pouvant faire partie intégrante de la coque ou alors en être séparée. Les bords libres de ladite housse sont fixés à la coque par un moyen convenable, des agrafes ou des boutons par exemple.

Le dispositif de portage 3, disposé sur la face arrière de la face extérieure 11 de la coque, est constitué comme une claie d'un sac de montagne, avec deux courroies porteuses 31a et 31b, munies de systèmes de réglage et de fermeture adéquats 31c, 31d, 31e, 31f, ainsi que d'une courroie de maintien 32a, 32b selon l'état connu de la technique. Une barre d'appui lombaire 33, à laquelle viennent se rattacher les courroies précédentes, peut être disposée vers le bas de la face arrière de la face extérieure 11, étant constituée d'une barre de forme adéquate en métal ou matériau synthétique, fixée d'une manière convenable à ladite face extérieure ou alors être constituée d'un renforcement de ladite face extérieure obtenu directement lors du moulage ou du thermoformage de la feuille constituant la face extérieure 11.

Une forme d'exécution préférentielle du siège de sécurité selon l'invention a été décrite ci-dessus, étant bien entendu que différentes variantes peuvent être envisagées; par exemple, l'appuie-cuisses a été décrit comme étant rabattable sous la coque par un pivotement autour de dispositifs de pivotement fixés sur les faces latérales de la coque; d'autres moyens de rabattement peuvent être envisagés, en particulier un glissement dudit appuie-cuisses sous le placet du siège. D'autre part le mouvement d'escamotage peut ne pas concerner uniquement l'appuie-cuisses comme indiqué ci-dessus mais le placet entier afin que le pilote soit vraiment selon une position debout au décollage et à l'atterrissage.

Selon une autre forme d'exécution du siège de sécurité selon l'invention, (non représentée), le siège de sécurité peut être constitué de deux éléments rigides, un premier élément dorsal et un deuxième élément en forme de placet. Ces deux éléments rigides peuvent être fixés d'une manière convenable quelconque à une sellette de toile selon l'art antérieur ou modifiée en conséquence. Par exemple, les éléments rigides peuvent être fixés d'un côté ou de l'autre de la toile formant la sellette ou alors la toile formant la sellette peut être doublée et comporter deux épaisseurs de manière à former une poche dorsale et une poche de placet, les éléments rigides correspondants étant disposés dans lesdites poches. Il n'est alors pas nécessaire de prévoir un dispositif spécial d'escamotage du placet puisque la liaison entre les deux éléments rigides est souple et que l'escamotage peut se faire comme avec une sellette de toile classique. Dans cette forme d'exécution, la fixation du harnais est faite de manière classique sur la sellette de toile. Comme pour la forme d'exécution préférentielle, la face arrière de la partie rigide dorsale peut être aménagée pour comporter un dispositif de portage, le siège déplié étant aménagé pour pouvoir contenir l'ensemble de la voile, des suspentes du harnais ainsi que des divers équipements nécessaires.

Il est nécessaire que les dimensions du siège correspondent le mieux possible à la corpulence du pilote, que ce soit pour obtenir une sécurité maximum ou pour augmenter son confort. Pour ceci, le siège selon l'invention peut être conçu en plusieurs tailles, par exemple une petite, une moyenne et une grande taille.

Une variante de l'une ou de l'autre des formes d'exécution ci-dessus peut consister à prolonger vers le haut la partie dorsale de la coque, respectivement de l'élément dorsal rigide, de manière à ce que la tête du pilote soit aussi protégée par une partie rigide.

Enfin, ce siège de sécurité a été décrit pour la pratique du parapente, il peut aussi s'appliquer à la pratique d'autres sports aéronautiques, en particulier un tel siège peut s'adapter à un ULM et remplir aussi les conditions de sécurité nécessaires à la pratique de ce type de sport.

Ainsi, le siège de sécurité, selon les diverses forme d'exécution proposées, offre une amélioration de la sécurité du pilote, particulièrement lors de chutes à relativement faible hauteur, en protégeant efficacement son bassin et sa colonne vertébrale, voire sa tête. Un tel siège doit contribuer à diminuer fortement les conséquences graves d'une grande partie des accidents se produisant lors de la pratique du parapente ou du vol sur ULM.

## Revendications

**1**-Siège de sécurité pour sports aéronautiques, caractérisé en ce que ledit siège est constitué d'une coque rigide (1), de forme généralement concave, un harnais (2) de fixation relié à des suspentes de parachute (23a, 23b), étant fixé sur ladite coque.

**2**-Siège de sécurité pour sports aéronautiques, caractérisé en ce que ledit siège est constitué d'une sellette en toile sur laquelle sont disposés un élément dorsal rigide ainsi qu'un élément de placet rigide, un harnais de fixation relié à des suspentes de parachute, étant fixé sur ladite sellette en toile.

**3**-Siège de sécurité selon la revendication 2, caractérisé en ce que l'élément dorsal rigide et l'élément de placet rigide sont disposés et fixés sur une face de la partie dorsale, respectivement de la partie de placet de ladite sellette de toile.

**4**-Siège de sécurité selon la revendication 2, caractérisé en ce que l'élément dorsal rigide et l'élément de placet rigide sont disposés et fixés entre deux toiles formant poche sur la partie dorsale, respectivement la partie de placet de ladite sellette de toile.

**5**-Siège de sécurité selon l'une des revendications précédentes, caractérisé en ce que ladite coque, respectivement ledit élément dorsal et ledit élément de placet, sont constitués de deux parois (10, 11) séparées par un espace intermédiaire (15) rempli, complètement ou en partie, d'un matériau ou d'une structure absorbante.

**6**-Siège de sécurité selon la revendication 5, caractérisé en ce que ledit espace intermédiaire est rempli, complètement ou en partie, d'un matériau sous forme de mousse synthétique.

**7**-Siège de sécurité selon la revendication 5, caractérisé en ce que ledit espace intermédiaire est rempli, complètement ou en partie, d'une structure cloisonnée.

**8**-Siège de sécurité selon la revendication 5, caractérisé en ce que ledit espace intermédiaire est rempli, complètement ou en partie, d'une structure en nid d'abeille.

**9**-Siège de sécurité selon la revendication 5, caractérisé en ce qu'une première portion dudit espace intermédiaire peut être remplie, complètement ou en partie, d'un matériau sous forme de mousse, une deuxième portion dudit espace intermédiaire peut être remplie, complètement ou en partie, d'une structure cloisonnée, une troisième portion dudit espace intermédiaire peut être remplie, complètement ou en partie, d'une structure en nid d'abeille.

**10**-Siège de sécurité selon l'une des revendications précédentes, caractérisé en ce qu'il comprend un appuie-cuisses escamotable (13).

**11**-Siège de sécurité selon la revendication 10, caractérisé en ce que ledit appuie-cuisses est maintenu en position ouverte ou escamotée par des crans de fin de course.

**12**-Siège de sécurité selon l'une des revendications 10 ou 11, caractérisé en ce que l'escamotage dudit appuie-cuisses est obtenu par pivotement.

**13**-Siège de sécurité selon l'une des revendications 10 ou 11, caractérisé en ce que l'escamotage dudit siège est obtenu par glissement.

**14**-Siège de sécurité selon l'une des revendications précédentes, caractérisé en ce que la partie dorsale de la coque, respectivement de l'élément dorsal, comprend un prolongement vers le haut en forme de protège-tête.

**15**-Siège de sécurité selon l'une des revendications précédentes, caractérisé en ce que ladite coque, respectivement ledit élément dorsal et ledit élément de placet, sont dimensionnés selon la carrure de l'utilisateur.

**16**-Siège de sécurité selon l'une des revendications précédentes, caractérisé en ce qu'il est agencé pour pouvoir contenir tout ou partie de l'équipement annexe nécessaire à l'accomplissement dudit sport aéronautique, la face arrière (11) de ladite coque, respectivement dudit élément dorsal, étant agencée (3) pour que ledit siège puisse être portée sur le dos.

**17**-Siège de sécurité selon l'une des revendications précédentes caractérisé en ce qu'il est prévu pour la pratique du parapente.

**18**-Siège de sécurité selon l'une des revendications 1 à 16, caractérisé en ce qu'il est prévu pour s'adapter à un avion de type ULM.

FIG. 1

FIG. 2

FIG. 4

FIG. 3

Office européen
des brevets

# RAPPORT DE RECHERCHE EUROPEENNE

Numero de la demande

EP    91 81 0783

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | DE-U-9 001 933 (WEITZEL)<br>* page 1, ligne 1 - page 2, ligne 2 *<br>--- | 1,10,12 | B64D17/02 |
| A | DE-A-2 442 044 (KROLL)<br>* page 4, ligne 3 - ligne 25 *<br>* page 9, ligne 6 - ligne 13 *<br>--- | 1,14 | |
| A | EP-A-0 327 778 (LASER LAB)<br>* colonne 5, ligne 42 - ligne 52 *<br>* figure 5C *<br>--- | 10,13 | |
| E | WO-A-9 108 948 (WENGER)<br><br>* le document en entier *<br><br>----- | 2,3,4,5,<br>7,17 | |

| | DOMAINES TECHNIQUES RECHERCHES (Int. Cl.5 ) |
|---|---|
| | B64D<br>B64C<br>B60N |

Le présent rapport a été établi pour toutes les revendications

| Lieu de la recherche | Date d'achèvement de la recherche | Examinateur |
|---|---|---|
| LA HAYE | 10 FEVRIER 1992 | HAUGLUSTAINE H. |

CATEGORIE DES DOCUMENTS CITES

X : particulièrement pertinent à lui seul
Y : particulièrement pertinent en combinaison avec un
     autre document de la même catégorie
A : arrière-plan technologique
O : divulgation non-écrite
P : document intercalaire

T : théorie ou principe à la base de l'invention
E : document de brevet antérieur, mais publié à la
     date de dépôt ou après cette date
D : cité dans la demande
L : cité pour d'autres raisons
...................................................................................................
& : membre de la même famille, document correspondant

EPO FORM 1503 03.82 (P0402)